# DEMANDE DE BREVET EUROPEEN

(11) **EP 0 998 155 A1**
(43) Date de publication de la demande: **03.05.2000**
(21) Numéro de dépôt: 99402570.8
(22) Date de dépôt: 19.10.1999
(51) Int. Cl.: H04Q 7/32

(54) **Procédé de commande d'un téléphone mobile**

(30) Priorité: 27.10.1998 FR 9813418
(71) Demandeur: SAGEM SA, 75783 Paris Cédex 16 (FR)
(72) Inventeur: Dimech, Jean-Marc, 95000 Cergy (FR)
(74) Mandataire: Schmit, Christian Norbert Marie

(57) **Abrégé**

Pour simplifier et pour améliorer la programmation des services offerts avec des téléphones mobiles, on prévoit de munir la mémoire d'un téléphone mobile d'une clef représentant la référence d'un opérateur. Par suite, on envoie des messages au téléphone mobile qui possède à un endroit convenu une clef correspondante. Les téléphones mobiles sont alors capables de vérifier (24, 46-49) que la clef correspond à celle de l'opérateur, de prendre en compte (27) les messages, et de les traiter pour en constituer un programme spécifique à l'utilisation voulue par cet opérateur.

## Description

La présente invention a pour objet un procédé de commande d'un téléphone mobile. Elle est plus particulièrement utilisable dans le cadre de la téléphonie de type GSM, mais son principe s'applique bien entendu à d'autres normes. Le but de l'invention est de simplifier la fabrication des téléphones mobiles, et de tenir compte facilement de la diversité des opérateurs de téléphonie qui acheminent des communications sur un territoire.

Dans le domaine de la téléphonie mobile, notamment de type GSM, le fonctionnement d'un téléphone mobile est conditionné par la présence d'un circuit de sécurité et d'identification en relation avec les circuits du téléphone mobile. Ce circuit de sécurité se présente dans certains cas sous la forme d'une carte à puce, ou sous la forme d'un micromodule de forme trapézoïdale spéciale. Au moment de la mise en service, le téléphone mobile consulte ce circuit de sécurité. Ce circuit de sécurité envoie au téléphone mobile des informations de divers types. Premièrement, il fait afficher sur l'écran du téléphone mobile un message de bienvenue, personnalisé au nom de l'opérateur qui gère le service. Il provoque ensuite l'exécution d'un protocole d'authentification pour ne laisser l'usage du téléphone mobile qu'au détenteur d'un code secret de ce circuit de sécurité.

La généralisation de l'utilisation des téléphones mobiles s'accompagne de la diversification de la palette des services offerts aux utilisateurs. Ainsi sont offerts d'une manière connue aux différents utilisateurs la possibilité de personnaliser la sonnerie de leur téléphone mobile ou la possibilité de faire enregistrer par l'opérateur auprès duquel ils sont abonnés une liste de numéros appelés préférentiellement. Les téléphones mobiles peuvent aussi recevoir des informations relatives à l'heure, des informations mémorisées propres à l'utilisateur, et ainsi de suite. La particularité de ces services est qu'ils sont en constante évolution. Etant donné qu'un téléphone mobile, même muni de son circuit de sécurité, est fourni une fois pour toutes à un utilisateur, il devient difficile d'allier la souplesse liée à l'évolution permanente des services offerts au caractère définitif de la mise à disposition du téléphone mobile.

Une première solution pour remédier à ce problème a pu consister à proposer l'échange des circuits de sécurité anciens munis de services anciens, obsolètes ou incomplets, par des circuits nouveaux comportant une palette mise à jour de services. Il a ainsi été proposé que ces circuits de sécurité nouveaux soient plus performants et comportent un ensemble de programmes proposant des services nouveaux ou différents. Cette solution présente l'inconvénient que le code secret du porteur doit être réactivé. Il subsiste par ailleurs le problème de devoir diffuser, éventuellement très régulièrement, de nouveaux circuits, à un nombre très important d'utilisateurs dès que l'éventail des services offerts change à nouveau. Le coût d'une telle solution n'est donc pas abordable pour un opérateur.

Une autre solution a consisté à développer des circuits de sécurité perfectionnés munis de facultés d'évolution. Cette démarche, tout en étant déjà une première solution n'est cependant pas satisfaisante. En effet d'une part les circuits de sécurité perfectionnés sont plus chers que les circuits standards. Ils sont plus chers parce qu'étant fabriqués en plus faible quantité l'amortissement des moyens de production est moins fort. D'autre part, cette demande présente encore l'inconvénient de correspondre à une date donnée d'évolution de l'ensemble des services offerts. Il est par exemple possible qu'à peine que le circuit a été livré, les services offerts par un opérateur évoluent pour offrir des services nouveaux voire supprimer des services anciens. Surtout pour un fabricant de téléphones mobiles, la réalisation de ces circuits perfectionnés correspond aux desiderata d'un opérateur. Pour un autre opérateur ceux-ci sont différents, et les circuits doivent être différents. Il n'y a pas d'économie d'échelle possible. Donc la solution consistant à proposer un circuit de remplacement n'est pas suffisante.

Dans l'invention, on apporte une solution à ce problème d'une manière particulièrement simple. La solution de l'invention offre par ailleurs une solution de standardisation : elle permet de fabriquer tous les téléphones mobiles, même les circuits spécifiques, de la même façon quels que soient les opérateurs auxquels ils sont destinés et les utilisations que les téléphones mobiles doivent offrir. Dans l'invention, on s'est rendu compte en effet que tous les services offerts par un opérateur de téléphonie consistaient pour l'essentiel à proposer une mise en communication automatisée, simplifiée, avec des services spécialisés. Ces services spécialisés peuvent être des services automatiques, à commande vocale, des services d'informations pour faire visualiser sur les écrans des téléphones mobiles des informations dispensées, ou des mises en relation avec une personne d'un service d'assistance.

L'invention a alors pour objet, dans ce but, un procédé dans lequel on mémorise dans un des circuits du téléphone mobile, à une adresse convenue à l'avance, un code relatif à l'identité de l'opérateur. Par la suite, au cours de l'utilisation du téléphone mobile, on envoie à ce téléphone mobile des messages de mise à jour de la palette de services. En général ces messages respectent un protocole dit de type SMS (Short Message Service - Court Message de Service). Selon l'invention dans ces messages, SMS ou non, on incorpore une référence à l'identité de l'émetteur du message. Lorsque l'émetteur du message est l'opérateur lui-même son identité est ainsi représentée dans le message.

Les téléphones mobiles munis du procédé de l'invention sont alors capables de lire ces messages, d'y rechercher à un endroit convenu la présence de la référence de l'identité de l'opérateur et, en cas de succès, de considérer le reste du message comme une instruction qui doit être utilisée pour paramétrer le téléphone mobile. De cette façon, si un type de service mémorisé dans le téléphone mobile est ajouté, modifié, voire supprimé, on peut de l'extérieur modifier tous les téléphones mobiles utilisant le réseau de cet opérateur, en même temps. En effet, les messages de mise à jour de l'opérateur, dans ce cas, sont diffusés d'une manière générale sur tout le réseau. Ils sont captés par tous les téléphones mobiles. Chacun d'eux effectue la mise à jour qui y correspond.

Dans la pratique, des messages de type SMS peuvent être envoyés sur une voie de balise. Ils peuvent être aussi envoyés, de préférence, hors communication téléphonique mais sur un canal de communication, à tous les téléphones mobiles qui se sont fait connaître d'une station de base au moment de l'établissement d'une session de liaison. Eventuellement au moment de cette reconnaissance, la station de base vérifie que le message de mise à jour n'a pas déjà été reçu par le téléphone mobile avant de le lui envoyer. En pratique le protocole de reconnaissance peut comporter dans ce but une phase pendant laquelle le téléphone mobile donne à la station de base la liste des messages de service qui sont mémorisés dans ses mémoires, ou bien la liste des messages de service dont il a eu connaissance, et dont il a gardé mémoire ou non.

L'invention a donc pour objet un procédé de commande d'un téléphone mobile dans lequel
- une station de base envoie un message selon un protocole convenu caractérisé en ce que
- on mémorise à un endroit convenu dans une mémoire du téléphone mobile une clef relative à un émetteur de message,
- on vérifie la présence de cette clef à un endroit convenu du message,
- et on commande le téléphone mobile avec le contenu du message si la clef du message correspond à la clef mémorisée.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: la représentation schématique de l'architecture d'un téléphone mobile nécessaire pour la mise en oeuvre du procédé de l'invention ;
- Figures 2a et 2b : des représentations schématiques des étapes essentielles du procédé de l'invention ;
- Figures 3a et 3b : des exemples de messages de service utilisables pour mettre en oeuvre le procédé de l'invention .
- Figure 4 : un exemple de l'allure d'un écran de téléphone mobile modifié par la mise en oeuvre du procédé de l'invention ;

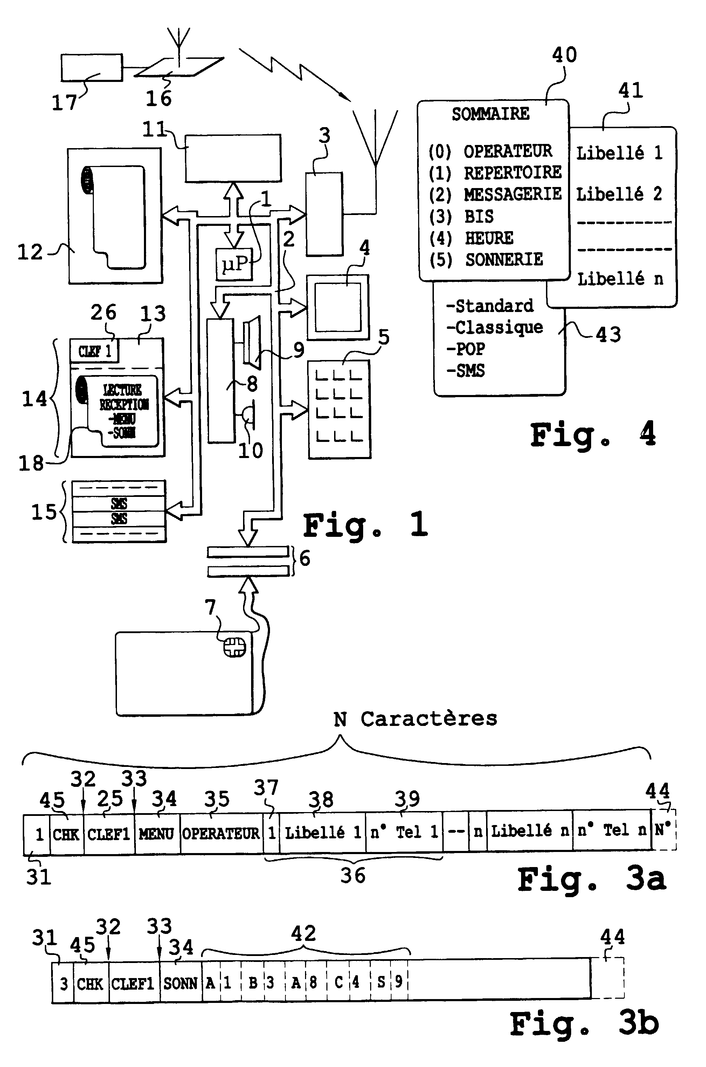

La figure 1 montre un téléphone mobile utilisable pour mettre en oeuvre le procédé de l'invention. Le téléphone mobile comporte essentiellement un microprocesseur 1 relié par un bus 2 à un ensemble de circuits. Ces circuits comportent essentiellement un émetteur récepteur 3 radioélectrique, un écran de visualisation 4, un clavier de commande 5, une interface 6 d'échange avec un circuit de sécurité 7. Dans un exemple le circuit 7 est contenu dans une carte à puce ou dans un jeton à puce. Le microprocesseur 1 est encore en relation avec des circuits de traitement de la parole 8 connectés d'une part à un haut-parleur 9 et à un microphone 10. Le bus 2 est encore en relation avec un jeu de mémoires. On a symboliquement représenté ainsi une mémoire de travail 11 par exemple de type dynamique, une mémoire programme 12 de préférence non volatile, et une mémoire de données 13 notamment de type FLASH EPROM, non volatile, programmable et effaçable. La mémoire 12 contient le système d'exploitation du microprocesseur 1. La mémoire 13 peut comporter une partie 14 pré-programmée à la livraison du téléphone mobile à un client et une partie 15 programmable au fur et à mesure de l'utilisation du téléphone mobile.

Toute autre architecture est cependant envisageable. La partition des mémoires est en effet ici uniquement indicative. Elle permet de mieux comprendre le fonctionnement de l'invention. Notamment la mémoire 13 peut être incorporée dans le circuit 7 de sécurité, en tout ou partie.

Le téléphone mobile de l'invention est utilisable dans un réseau, comportant un certain nombre de stations de base. La figure 1 montre une station de base 16 reliée à un circuit général de commutation 17 d'un opérateur de téléphonie mobile. Ce circuit 17 permet de mettre en relation un utilisateur du téléphone mobile de la figure 1 avec un autre interlocuteur, relié à un poste de téléphonie fixe ou, lui aussi, à un poste de téléphonie mobile.

Il est connu que la station de base 16 envoie des messages selon des protocoles convenus. Par exemple les messages d'une manière habituelle sont des messages d'information et ces messages sont montrés sur l'écran 4 du téléphone mobile. Des sous-programmes du système d'exploitation gèrent cette visualisation. Ces messages peuvent être montrés, d'une manière impérative, tant que l'utilisateur n'a pas acquitté le fait qu'il en avait pris connaissance. Les messages d'information de ce type sont normalement divisés en quatre classes. La classe zéro concerne les informations affichées à l'écran, qu'on peut faire disparaître après les avoir consultées, mais qu'on peut également choisir d'enregistrer dans le téléphone mobile, s'il reste assez de place en mémoire dans une mémoire de messages, ou si le message peut y prendre la place d'un autre message.

Les messages de classe un vont obligatoirement se stocker dans un emplacement libre de la mémoire des messages. Les messages de classe deux vont se stocker impérativement dans le circuit 7, tandis que les messages de classe trois sont transférés à un ordinateur personnel connecté au poste de téléphonie mobile par l'intermédiaire d'une interface (non représentée, mais par exemple de type RS 232).

Une des caractéristiques essentielles de l'invention est que la mémoire 13 de données comporte, à un endroit convenu, une clef relative à un émetteur de message. Par exemple cet endroit convenu sera situé à l'adresse 00 de la mémoire 13. Mais toute autre adresse est envisageable. Dans la suite de cet exposé, on considérera que l'opérateur de téléphonie mobile qui gère le réseau des stations de base 16 a pour nom OPERATEUR. Cet opérateur OPERATEUR a institué une clef qui le caractérise : la clef CLEF 1. Il aurait pu aussi utiliser le code OPERATEUR pour représenter la clef CLEF 1. De préférence, le code de la clef sera bien plus complet que ce nom seul.

En outre dans la mémoire 13, on a préalablement enregistré un programme spécifique 18. Ce programme spécifique 18 présente cependant la particularité d'être un programme standardisé. Le programme spécifique 18 pourrait avoir été incorporé au programme enregistré dans la mémoire 12. Il n'est montré séparé, ici, que pour faire apparaître l'apport de l'invention. Ce programme spécifique 18 comportera essentiellement un sous-programme LECTURE dont on verra le contenu par la suite, ainsi que des sous-sous-programmes en nature et nombre variables, par exemple des sous-sous-programmes MENU de menu ou SONN de sonnerie.

Le programme spécifique 18 est standardisé en ce sens qu'il est utilisable pour n'importe quel opérateur, dans n'importe quel pays. Pour simplifier, on peut admettre que les différents services mis à disposition par un opérateur auprès des utilisateurs consistent pour l'essentiel à les informer du nom d'un service, et à leur proposer une connexion automatique, simplifiée, avec ce service. En définitive, il faut mettre à la disposition des utilisateurs un numéro de téléphone de service relatif à un service dont ils connaissent le nom et l'utilité.

La figure 2a montre la succession des étapes qui permettent la mise en oeuvre du procédé de l'invention. A une première étape 19, le téléphone mobile est mis en service par l'utilisateur. D'une manière classique à une étape 20, il lui est demandé de composer sur le clavier 5 son code personnel d'identification (son code PIN). Une étape 21 ultérieure est une étape de test. Elle permet de vérifier le caractère correct du code PIN composé. S'il n'est pas correct la composition est rejetée en une opération 22. D'une manière classique l'opération 22 consiste à proposer à l'utilisateur de composer à nouveau son code PIN, tout en comptant la tentative qui a échoué. Au-delà d'un certain nombre de tentatives, généralement trois, le circuit 7 est bloqué.

Dans le cas où l'utilisateur est un utilisateur normal, il franchit avec succès l'étape 21. Selon l'invention, le programme spécifique 18 qui est alors lancé comporte un sous-programme principal LECTURE de lecture (figure 2a) et un sous-programme principal RECEPTION de réception (figure 2b). Le programme principal de lecture est utilisé au moment de la mise en service, le programme principal de réception est utilisé, après la mise en service, lorsqu'au cours d'une session d'utilisation du téléphone mobile un message de service est reçu. Selon l'invention, dès que l'étape d'authentification du porteur du téléphone mobile a été franchie avec succès, on passe au sous-programme principal LECTURE du programme spécifique 18. Selon l'invention, ce sous-programme de lecture consiste à aller lire tous les messages de service, SMS notamment, préalablement reçus et qui ont été stockés dans la partie 15 de la mémoire 13. Ceci est exécuté au cours d'une étape 23 qui suit l'étape 21. Dans cette phase de lecture, au cours d'une étape- 24 qui sera détaillée plus loin on cherche à savoir si, dans les messages SMS mémorisés dans la partie 15 on peut détecter une clef en une zone 25 de ces messages SMS (montrées figures 3a et 3b) et qui correspondrait à une clef mémorisée en zone convenue 26 dans la partie 14 de la mémoire 13. Eventuellement, la clef de la zone 26 peut être stockée dans le circuit 7. Dans l'exemple représenté, pour l'opérateur OPERATEUR la clef qui le représente est la clef CLEF 1.

Si dans un message SMS lu dans la mémoire 15 on détecte cette clef, on exécute alors les sous-sous-programmes du programme spécifique 18 dont des références d'instruction sont identiques à des références d'instruction contenues dans le message lu, elles aussi à des endroits convenus. Cette exécution 27 se produit naturellement après le test 24. A l'issue de l'exécution 27, ou si le test 24 a été négatif, on reprend la suite 28 des opérations naturellement effectuées par le téléphone mobile au moment de sa mise en service.

La figure 2b montre ce qui se passe lorsqu'au cours d'une session un message SMS de service est reçu. En exécution du programme spécifique 18, lorsqu'un message est reçu, le microprocesseur 1 fait exécuter un test 29 du même type que le test 24. Le cas échéant, il exécute une ou des instructions qui correspondent au contenu du message reçu au cours d'une étape 30. A l'issue, ou en cas d'échec du test 29, la suite 28 du programme mis en oeuvre par le téléphone mobile est reprise d'une manière classique.

Les figures 3a et 3b montrent pour deux sous-sous-programmes principaux du programme spécifique 18, la nature des messages SMS envoyés par la station de base et reçus par le téléphone mobile de la figure 1. Elles permettent de comprendre l'exécution qui s'en suit. Ces messages comportent, sur N caractères en général N=176, une première zone 31 indiquant la classe, de zéro à trois du message transmis. Dans l'invention d'une adresse 32 convenue de départ dans ce message jusqu'à une adresse 33 de fin se trouve la zone 25 dont le contenu doit être comparée avec celui de la zone 26. Dans l'exemple le libellé de la clef en zone 25 est CLEF 1 qui est bien le même que le libellé retrouvé dans la zone 26.

Le message de la figure 3a comporte dans une zone 34, par exemple après l'adresse 33, une référence d'instruction. Il serait néanmoins possible plutôt que de charger une référence d'instruction dans une zone 34 du message d'enregistrer un code instruction lui-même. Dans ce cas, les sous-sous-programme du programme spécifique 18 pourraient être évités. Néanmoins compte tenu qu'une utilisation principale standardisée sera une utilisation de type menu, affichable sur l'écran 4, on pourra préenregistrer dans la partie 14, de la mémoire 13 l'ensemble des instructions d'un jeu d'instructions qui correspond à l'affichage d'un menu. Le sous-sous-programme correspondant est ici appelé MENU. Les références d'instructions du message de la figure 3a comportent donc une information MENU à titre de référence d'instructions en zone 34 (ou une information équivalente) si ce sous-sous-programme est recherché.

En pratique les références d'instructions en zone 34 ont ici pour but de lancer un jeu d'instructions qui fera essentiellement afficher le nom de l'opérateur, ou un signe qui le représente, en tête des options d'un menu d'utilisation. Dans ce but, après la référence d'instruction 34, le message comporte une zone 35 dans laquelle figure ce nom d'opérateur. Ainsi, pour l'opérateur OPERATEUR la zone 35 comportera l'indication du libellé OPERATEUR.

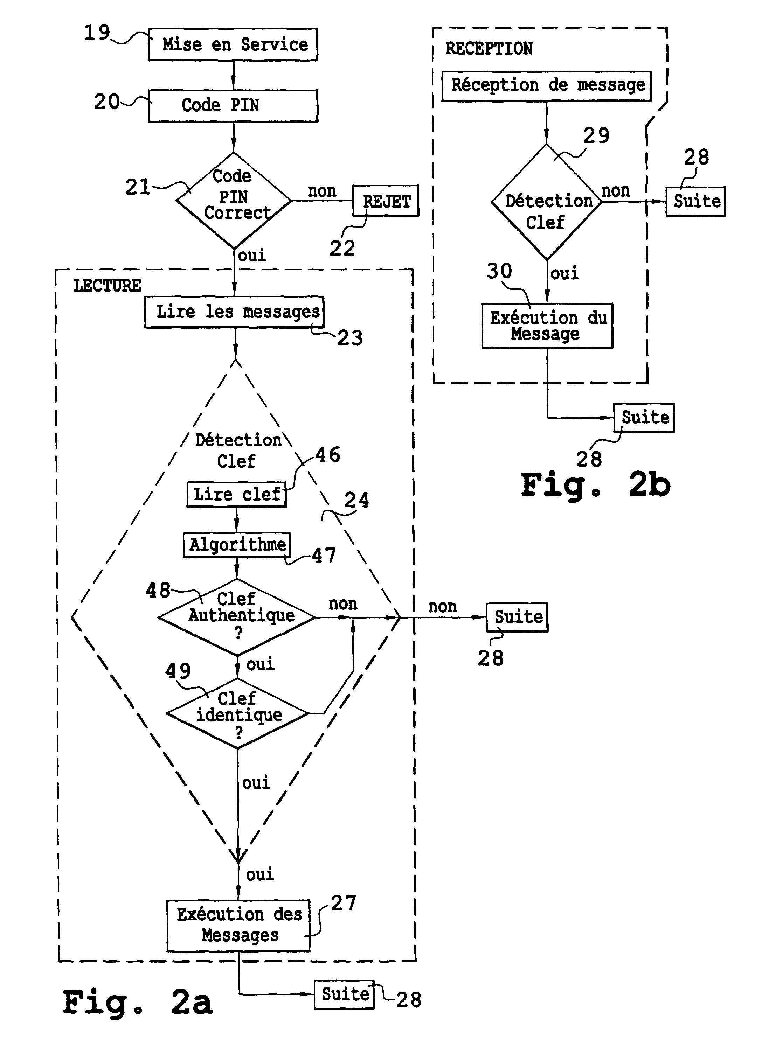

L'exécution du sous-programme MENU conduira alors, figure 4, à montrer sur l'écran 4 du téléphone mobile une liste d'options d'un menu ainsi constitué. Cette liste s'intitule naturellement SOMMAIRE. Mais cet intitulé peut être omis. Auparavant, avant l'invention, cette liste ne comportait que des options classiques du type REPERTOIRE, MESSAGERIE, BIS, HEURE et SONNERIE. L'option REPERTOIRE consistait à mettre à la disposition de l'utilisateur un ensemble de numéros de téléphone personnels préenregistrés dans le but de lui faciliter la mémorisation et dans le but de lui permettre une communication automatique avec ses interlocuteurs préférés. L'option MESSAGERIE consiste pour l'utilisateur à se connecter, dans les circuits 17 de l'opérateur, à sa messagerie vocale pour se faire délivrer les messages que d'autres ont laissés pendant que son téléphone mobile était hors service. L'option BIS consiste à pouvoir rappeler le dernier numéro de téléphone composé. L'option HEURE permet de connaître l'heure. L'option SONNERIE sera vue plus loin.

Dans l'invention on a rajouté une option supplémentaire qui est une option de rang zéro. Elle se place naturellement en tête des autres. Plutôt que d'indiquer le type de services disponibles et dont le libellé est normalement figé par le contenu de la mémoire 12, l'option de rang zéro propose un libellé correspondant au nom de l'opérateur OPERATEUR. Indépendamment de tout sous-programme correspondant au sous-sous-programme MENU, cette manière de faire permet d'indiquer à l'utilisateur quel est l'opérateur avec lequel il est relation pour établir les communications avec ses interlocuteurs. Les numéros d'ordre, 0 à 5 montrés entre parenthèses sur la figure 4, ne sont pas apparents dans l'écran 4. Ils sont là uniquement pour organiser la succession des options affichées sur l'écran 4.

Le sous-sous-programme MENU appelé par la zone 34 est en fait plus complet. Il comprend notamment la création d'une liste de services, propres à l'opérateur OPERATEUR et qui sont chacun représentés par une zone 36 du message de service envoyé selon le protocole convenu. La zone 36 comportera principalement, dans une zone 37, un numéro d'ordre représentatif d'une place dans un écran, dans une zone 38, un libellé représentatif d'un nom de service et, dans une zone 39, un numéro de téléphone à composer en automatique pour accéder aux services dont le nom figure en zone 38. Parmi les services envisageables, on pourra par exemple imaginer un service de dépannage du téléphone mobile ou un service de dépense du mois pour savoir quel est le crédit d'heure encore disponible pour un mois, compte tenu d'un type d'abonnement souscrit par l'utilisateur. Un autre service du menu MENU permettra par exemple de recevoir communication de messages publicitaires en relation avec l'opérateur de téléphonie. Ainsi, après la zone 35 il y aura autant de zone 36 qu'il y aura de types de services différents.

A cet effet, le sous-sous-programme MENU du programme spécifique 18 consistera non seulement à afficher le nom de l'opérateur en tête de l'écran 4 mais aussi, si l'utilisateur sélectionne ce nom d'opérateur et actionne une touche de validation, à remplacer le contenu 40 de cet écran 4 par un contenu 41 mentionnant tous les services auxquels l'utilisateur peut avoir accès auprès de cet opérateur OPERATEUR. Les services sont mentionnés dans cet autre écran 41 par les libellés Libellé 1, Libellé 2, ... Libellé n contenus dans le message de la figure 3a. Il est par ailleurs possible, plutôt que de provoquer une communication téléphonique à partir d'un libellé, de provoquer, par la sélection d'un libellé, l'affichage d'un sous-sous-menu qui renverra éventuellement à un autre message SMS stocké et donc à d'autres services disponibles.

La structure du message de la figure 3b selon le protocole convenu est du même ordre. Elle comporte notamment la clef CLEF 1 entre les adresses 32 et 33 et une référence d'instruction SONN en zone 34. La référence d'instruction SONN concerne ici un paramétrage de la sonnerie du téléphone mobile. Mais cet exemple de paramétrage de sonnerie n'est indiqué que pour montrer comment, d'une autre façon, fonctionne le procédé de l'invention. La zone 34 est ici suivie d'une zone 42 avec des arguments de deux types. Des premiers arguments A, B, C, etc. S sont représentatifs de notes de musique respectivement Do, Ré, Mi, etc. et de silences, alors que les deuxièmes arguments qui les suivent représentent des durées pendant lesquelles ces notes de musiques doivent être jouées par le haut-parleur 9 du téléphone mobile. Le sous-programme SONN chargé dans la partie 14 de la mémoire 13 pourra avoir ainsi pour objet, de faire écouter la sonnerie proposée, éventuellement aussi souvent que l'utilisateur le désire, de faire enregistrer cette sonnerie dans la mémoire des sonneries disponibles pour le téléphone mobile si l'utilisateur le désire, puis de faire afficher cette sonnerie dans un sous-menu quand, dans l'écran 40 l'option SONNERIE aura été sélectionné.

Ainsi dans ce cas, dans un écran 43, on verra apparaître parmi les sonneries possibles une sonnerie standard, une sonnerie en musique classique, une sonnerie en musique pop ou bien une sonnerie, indiquée ici SMS, représentative de la sonnerie qui a été transmise par le message de la figure 3b. Si l'opérateur sélectionne dans l'écran 43 la sonnerie SMS et qu'il valide sa sélection, chaque fois qu'il recevra un appel téléphonique cette sonnerie sera émise en lieu et place d'une sonnerie précédente.

Les messages de services des figures 3a et 3b peuvent être envoyés à de nombreuses reprises par des stations de base 16, de manière à être sûr d'atteindre tous les téléphones mobiles au moment de leur édition. Par exemple, ils pourront être envoyés par les stations de base 16 pendant une durée d'un mois, régulièrement toutes les heures s'ils sont envoyés sur une fréquence balise de ces stations de base. De préférence, l'échange avec le téléphone mobile pour lui envoyer le message passera par une interrogation individualisée provenant de la station de base pour demander au téléphone mobile quels sont les messages qu'il a déjà reçus et qu'il a enregistré dans la partie 15 de sa mémoire 13. Dans ce but chaque message comportera dans une zone 44 un numéro d'ordre permettant à l'opérateur de savoir, le moment venu, si le téléphone mobile avec lequel une station de base entre en relation dispose de la dernière version d'un message ou d'une version ancienne. Cette interrogation individualisée pourra se produire préférentiellement à chaque mise en service du téléphone mobile, ou à chaque changement de zone géographique en cours de session d'utilisation.

De manière à éviter des programmations intempestives ou des interventions malintentionnées, chaque message comportera une zone 45 comportant des indications de cohérence de la clef, ici CLEF 1. Dans ce cas, figure 2a, l'étape 24 comportera une étape 46 pendant laquelle le microprocesseur 1 lit la clef dans la zone 25, suivie d'une étape 47 de mise en oeuvre d'un algorithme d'authentification de la clef. L'algorithme 47 dont le programme de mise en oeuvre sera contenu dans la mémoire 13 dans le programme spécifique 18, peut comporter une concaténation et un traitement des informations binaires stockées dans la zone 25, ainsi que dans les autres zones 34 à 44 du message. L'algorithme 47 peut néanmoins être beaucoup plus complexe et être par exemple exécuté par le circuit de sécurité 7 du module de sécurité du téléphone mobile. A l'issue de l'exécution de l'algorithme 47, un test 48 vérifie que la clef en zone 25 correspond bien au résultat de l'algorithme 47. Si c'est le cas, si le résultat de l'algorithme 47 est exactement la clef CLEF 1 contenue dans la zone 25, on en déduit que la clef est authentique.

Par suite on lance un deuxième test, le test 49 qui sert à savoir si la clef authentifiée est identique à la clef stockée en zone 26 de la mémoire 13. Le but de ce test 49 est de permettre de ne prendre en considération, et de ne stocker, que les messages qui sont véritablement émis par l'opérateur OPERATEUR pour l'utilisateur concerné.

En outre pour ce dernier, il est possible de séparer les utilisateurs en classes. Un utilisateur peut être de classe un, par exemple un professionnel qui utilise son téléphone mobile pour les besoins de son travail ou de classe deux, une personne qui l'utilise pour ses besoins privés. Ou encore un homme ou une femme, ou encore une personne âgée de plus ou de moins de quarante ans. Ces classes permettent d'orienter des messages d'une manière plus fine en fonction de l'utilisateur recherché. Ceci est particulièrement utile dans le domaine de la diffusion des messages et des promotions publicitaires. Dans ce cas, la clef stockée en zone 26 dans la mémoire 13, par exemple CLEF 1, CLEF 2 ou autre, renseignera en fait d'une part sur le nom de l'opérateur et d'autre part sur la classe de l'utilisateur. Pour un même opérateur, elle est différente d'une classe d'utilisateur à l'autre.

## Revendications

1. Procédé de commande d'un téléphone mobile (1-15) dans lequel
- une station de base (16) envoie un message selon un protocole (31-39) convenu
caractérisé en ce que
- on mémorise (13) à un endroit convenu (26) dans une mémoire (14) du téléphone mobile une clef mémorisée relative à un émetteur de message,
- on vérifie (24) la présence de cette clef mémorisée à un endroit (25) convenu du message,
- et on commande (40, 41, 43) le téléphone mobile avec le contenu du message si la clef du message correspond à la clef mémorisée.

2. Procédé selon la revendication 1, caractérisé en ce que
- on mémorise dans une mémoire du téléphone mobile un jeu (MENU) d'instructions relatives à un émetteur du message,
- on détecte des références (MENU) à ces instructions dans le message reçu,
- et on exécute (27, 30) dans le téléphone mobile les instructions qui correspondent à ces références.

3. Procédé selon l'une des revendications 1 à 2, caractérisé en ce qu'on vérifie la cohérence de la clef contenue dans le message avec des données (45) de cohérence contenues dans ce message.

4. Procédé selon l'une des revendications 1 à 3, caractérisé en ce que
- on enregistre des messages dans la mémoire du téléphone mobile, et
- à la mise en service (19-21) du téléphone mobile,
- on lit (23) les messages enregistrés, et
- on exécute (27) ceux pour lesquels on trouve la présence de la clef.

5. Procédé selon l'une des revendications 1 à 4, caractérisé en ce qu'on personnalise la clef en fonction de l'utilisateur du téléphone mobile.

6. Procédé selon l'une des revendications 1 à 5, caractérisé en ce qu'on envoie les messages hors session de communication.

7. Procédé selon l'une des revendications 1 à 6, caractérisé en ce que la station de base envoie des messages comportant un code d'instruction (34), des adresses (37) et des données (38, 39).

8. Procédé selon l'une des revendications 1 à 8, caractérisé en ce que :
- on munit chaque message d'une zone (44) dans laquelle est placé une référence d'ordre.
